# EUROPEAN PATENT SPECIFICATION

(11) **EP 2 394 964 B1**
(45) Date of publication and mention of the grant of the patent: **25.06.2014**
(21) Application number: 09839686.4
(22) Date of filing: 07.08.2009
(51) Int. Cl.: C02F 1/44, B01D 61/06, B01D 61/12, B01D 61/58, B01D 63/12, B01D 61/02

(54) **SPIRAL-TYPE SEAWATER DESALINATION SYSTEM**
MEERWASSERENTSALZUNGSSYSTEM VOM SPIRALTYP
SYSTÈME DE DESSALEMENT DE L'EAU DE MER DE TYPE SPIRAL

(30) Priority: 06.02.2009 JP 2009026627
(43) Date of publication of application: 14.12.2011
(73) Proprietor: Mitsubishi Heavy Industries, Ltd., Tokyo 108-8215 (JP)
(72) Inventor: ITO, Yoshiaki, Nagasaki-ken 851-0392 (JP); TAKEUCHI, Kazuhisa, Nagasaki-ken 851-0392 (JP); HORI, Takayoshi, Nagasaki-ken 850-8610 (JP); TANAKA, Kenji, Nagasaki-ken 850-8610 (JP); IWAHASHI, Hideo, Nagasaki-ken 850-8610 (JP)
(74) Representative: Henkel, Breuer & Partner
(86) International application number: PCT/JP2009/064059
(87) International publication number: WO 2010/089912

(56) References cited:
- WO-A1-2005/082497
- WO-A1-2009/156547
- DE-C1- 4 213 714
- JP-A- 2000 167 358
- JP-A- 2001 137 672
- JP-A- 2006 187 719
- JP-T- 2004 518 531
- US-A1- 2002 108 900
- US-B1- 6 190 556

## Description

### TECHNICAL FIELD

The present invention relates to a spiral type seawater desalination apparatus capable of reducing the fluctuation in reverse osmosis membrane elements housed in a pressure vessel.

### BACKGROUND ART

An evaporation method by which seawater is evaporated, and a reverse osmosis method by which seawater is pressurized to pass through a type of a filtration membrane called a reverse osmosis membrane (RO membrane) to filter fresh water while the salt content of the seawater is concentrated and discharged, have been used as conventional methods to obtain fresh water from seawater that is raw water.

The later reverse osmosis method is superior to the evaporation method in energy efficiency. However, the reverse osmosis method has such problems that a careful pretreatment (a treatment using "an ultrafiltration membrane (UF membrane)" or "a microfiltration membrane (MF membrane)" that reduces a turbid content in seawater that is raw water) is required so as not to clog the RO membrane with microorganisms and deposits in seawater, and that maintenance or the like is costly.

Examples of reverse osmosis membrane apparatuses include: a "hollow string membrane" type reverse osmosis membrane apparatus molded into a hollow string-like shape with a substantially pasta-sized width, and filters from outside to inside; and a "spiral membrane" type reverse osmosis membrane apparatus in which a sheet of a filtration membrane is overlaid with a strong mesh support to keep its strength with their edges bonded to form an envelope, the envelope is then wound in a Swiss roll fashion, and pressure is applied from its cross-section direction. For the pressure application, for example, high-pressure pumps such as turbine pumps and plunger pumps are used.

The reverse osmosis method has difficulty to obtain water quality as high as that obtained by the evaporation method. Therefore, a plurality of reverse osmosis membrane apparatuses needs to be combined to obtain high purity water quality.

An embodiment of a seawater desalination apparatus of a conventional spiral reverse osmosis membrane apparatus is represented in Fig. 8 (Patent Document 1: Japanese Patent Application Laid-open No. 2001-137672).

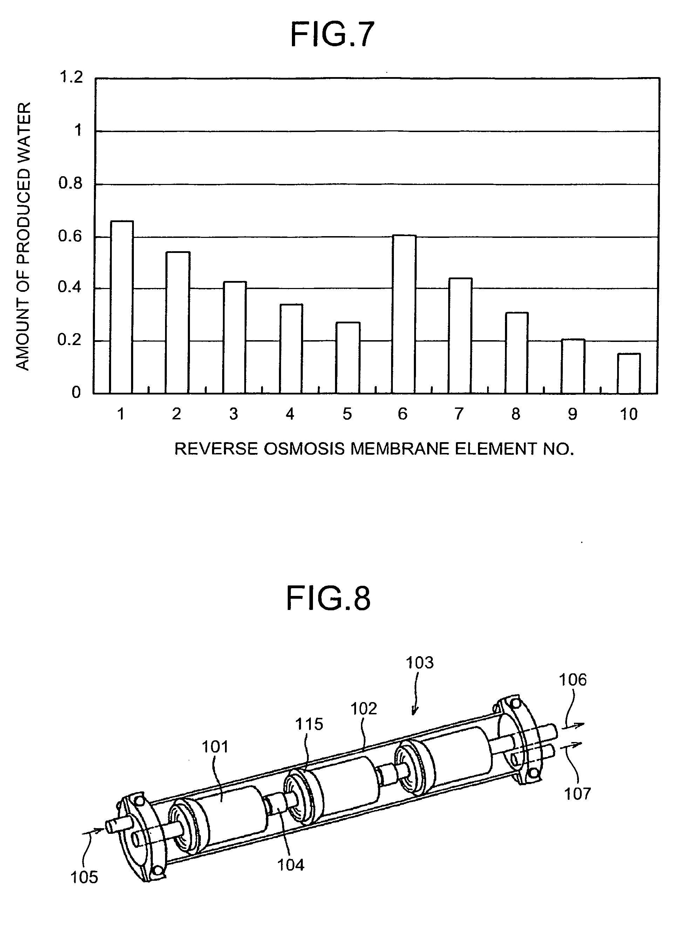

As shown in Fig. 8, a reverse osmosis membrane module unit is constituted with a plurality of reverse osmosis membrane modules 103 (three modules in this embodiment) provided in parallel through a permeated water pipe 104. Each of the reverse osmosis membrane modules 103 has a plurality of reverse osmosis membrane elements 101 that is serially connected to each other and is housed in a cylindrical pressure vessel 102.

In Fig. 8, numeral 105 denotes raw water (supplying water), 106 denotes permeated water, 107 denotes concentrated water, and 115 denotes a brine seal.

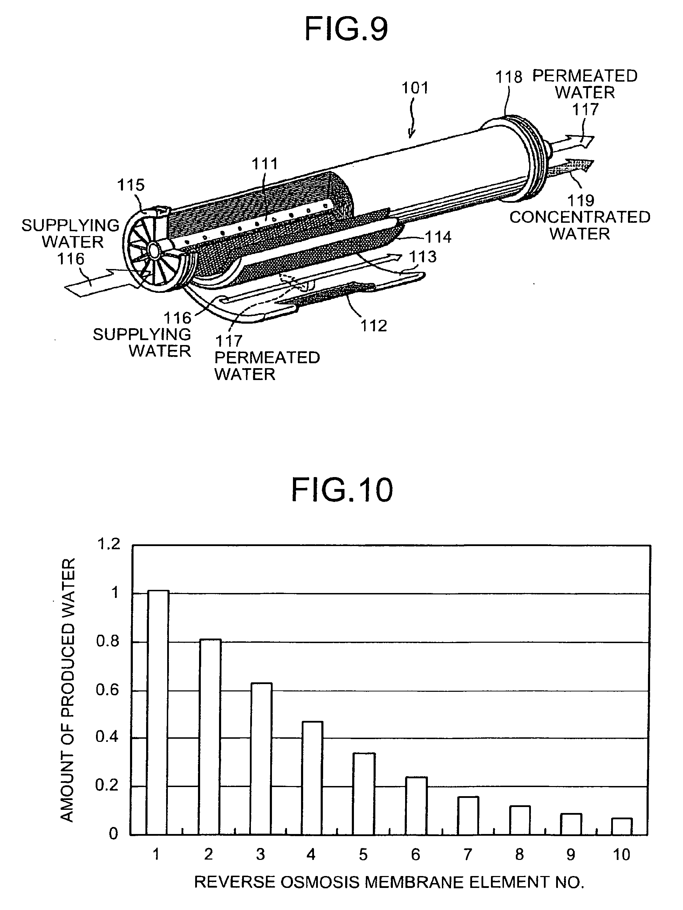

As shown in Fig. 9, for example, each of the reverse osmosis membrane elements 101 has a structure in which an envelope-shaped reverse osmosis membrane 113 including a passage material 112 is wound spirally with a mesh spacer 114 around a collecting pipe 111, and the brine seal 115 is provided at one end of the reverse osmosis membrane element 101. Each of the reverse osmosis membrane elements 101 leads supplying water (sea water) 116 with a predetermined pressure supplied from the front-side brine seal 115 into the space between adjacent surfaces of the envelope-shaped reverse osmosis membrane 113 through the mesh spacer 114 in turn. Permeated water (fresh water) 117 passed through the reverse osmosis membrane 113 by reverse osmosis is brought out from a rear seal 118 through the collecting pipe 111. Concentrated water 119 is also brought out from the rear side of the reverse osmosis membrane element 101.

When using such a spiral reverse osmosis membrane element 101 for seawater desalination, about six to eight of the reverse osmosis pressure membrane elements 101 are housed in a single pressure vessel 102 to be used.

A Christmas tree type reverse osmosis (RO) device constructed with a plurality of elements has also been developed (Patent Document 2: Japanese Patent Application Laid-open No. 2007-125527).

The reasons the elements are housed in the pressure vessel 102 are described below.
1) When the number of reverse osmosis membrane elements 101 housed in a single pressure vessel 102 is increased to reduce the number of pressure vessels 102, the number of high pressure branched pipes is reduced, which cuts construction costs.
2) Reducing the number of pressure vessels 102 installed leads to the reduction of an installation area required.
3) By reducing the number of pressure vessels 102, a supplying water amount flown into a single reverse osmosis membrane element 101 averagely increases. Because of this, concentration polarization phenomenon, by which the concentration is elevated at a membrane surface, can be suppressed to improve desalination performance.

Patent Document 1: Japanese Patent Application Laid-open No. 2001-137672
Patent Document 2: Japanese Patent Application Laid-open No. 2007-125527

The documents US 2002/108900 A1, WO 2005/082497 A1, US 6190556 B1 and WO 2009/156547 A1 disclose various arrangements of water treatment devices and methods for producing potable water from seawater using reverse osmosis or nanofiltration elements using a system having in a pressure vessel a series of spiral wound membrane modules with the permeate line split into a front and a rear side.

### DISCLOSURE OF INVENTION

### PROBLEM TO BE SOLVED BY THE INVENTION

When the number of reverse osmosis membrane elements 101 housed in a single pressure vessel 102 is increased (ten elements, for example), the difference between the water quality flown in the front reverse osmosis membrane element (1-th) and the water quality flown in the rearmost reverse osmosis membrane element (10-th) increases. This results in a problem as shown in Fig. 10. The amount of the produced water obtained from the rearmost reverse osmosis membrane (10-th) is extremely smaller than the amount of the produced water obtained from the front reverse osmosis membrane (1-th).

As shown in Fig. 10, the membrane of the front reverse osmosis membrane element (1-th) produces a larger amount of permeated water than the membranes of other elements. As a result, only the front membrane is extremely likely to be stained. On the other hand, the membrane of the rearmost reverse osmosis membrane element (10-th) produces the extremely small amount of permeated water, which leads to a problem that the membrane cannot be utilized effectively.

Therefore, the fluctuation of the using condition of the individual reverse osmosis membrane element 101 increases, so that the reverse osmosis membrane element 101 becomes inefficient as a whole. Thus, it is currently general to house, in a single pressure vessel 102, equal to or less than eight elements, more preferably equal to or less than six elements.

For the above reason, a spiral type seawater desalination apparatus capable of reducing the fluctuation in the reverse osmosis membrane elements 101, of increasing the housing number of reverse osmosis membrane elements 101 housed in a single pressure vessel 102, and of increasing the production efficiency of seawater desalination, has been desired to be developed.

The present invention has been made in view of the problems, and an object thereof is to provide a spiral type seawater desalination apparatus capable of reducing the fluctuation in reverse osmosis membrane elements housed in a pressure vessel.

### MEANS FOR SOLVING PROBLEM

According to the present invention, a spiral type seawater desalination apparatus includes the features of claim 1.

Advantageously, the spiral type seawater desalination apparatus further includes an energy recovery apparatus that is mounted in the front-side permeated water line and recovers energy of the front-side permeated water with high pressure. The pressure regulating valve that is mounted in the front-side permeated water line is replaced with a flow regulating valve.

Advantageously, in the spiral type seawater desalination apparatus, a three-way valve is interposed between the flow regulating valve that is mounted in the front-side permeated water line and the energy recovery apparatus.

Advantageously, the spiral type seawater desalination apparatus according to claim 1 further includes: a pressure conversion apparatus that converts pressure energy of the front-side permeated water into pressure energy of the rear-side permeated water; and a second reverse osmosis membrane apparatus that produces permeated water through a reverse osmosis membrane using the rear-side permeated water whose pressure is increased.

Advantageously, in this spiral type seawater desalination apparatus, a three-way valve is interposed between the flow regulating valve that is mounted in the front-side permeated water line and the pressure conversion apparatus.

### EFFECT OF THE INVENTION

According to the present invention, the fluctuation in reverse osmosis membrane elements can be reduced, and the number of reverse osmosis membrane elements housed in a single pressure vessel can be increased (ten elements, for example), which enables to increase the production efficiency of seawater desalination.

When substantially the same number of reverse osmosis membrane elements as before (six to eight elements) are housed in the pressure vessel to be used, the fluctuation in the reverse osmosis membrane elements housed in a single pressure vessel can be reduced. The amount of the produced water obtained from the front element is reduced so that the element becomes hard to be stained, and the rearmost element is also used more effectively, which enables to prolong the life of a membrane and to reduce the washing frequency of the membrane. Furthermore, the number of pressure vessels in a whole desalination plant can be reduced by as much as the room is made in the front element.

### BRIEF DESCRIPTION OF DRAWINGS

[Fig. 1] Fig. 1 is a schematic of a spiral type seawater desalination apparatus according to a first embodiment.
[Fig. 2] Fig. 2 is a schematic of a spiral type seawater desalination apparatus according to another example not in accordance with the invention.
[Fig. 3] Fig. 3 is a schematic of a spiral type seawater desalination apparatus according to a second embodiment.
[Fig. 4] Fig. 4 is a schematic of a spiral type seawater desalination apparatus according to a third embodiment.
[Fig. 5] Fig. 5 is a schematic of another spiral type seawater desalination apparatus according to the second embodiment.
[Fig. 6] Fig. 6 is a schematic of another spiral type seawater desalination apparatus according to the third embodiment.
[Fig. 7] Fig. 7 is a graph of the amount of the produced water obtained from each element in the spiral type seawater desalination apparatus according to the first embodiment.
[Fig. 8] Fig. 8 is a schematic of the seawater desalination apparatus of a spiral reverse osmosis membrane apparatus according to a conventional art.
[Fig. 9] Fig. 9 is a part exploded schematic of the spiral reverse osmosis membrane apparatus according to a conventional art.
[Fig. 10] Fig. 10 is a graph of the amount of the produced water obtained from each element in the spiral type seawater desalination apparatus according to a conventional art.

### BEST MODE(S) FOR CARRYING OUT THE INVENTION

The present invention will be described in detail with reference to the accompanying drawings. The present invention is not limited to the embodiments. Constituting elements of the embodiments include elements readily convertible by a person skilled in the art, or elements being substantially the same as those.

### First Embodiment

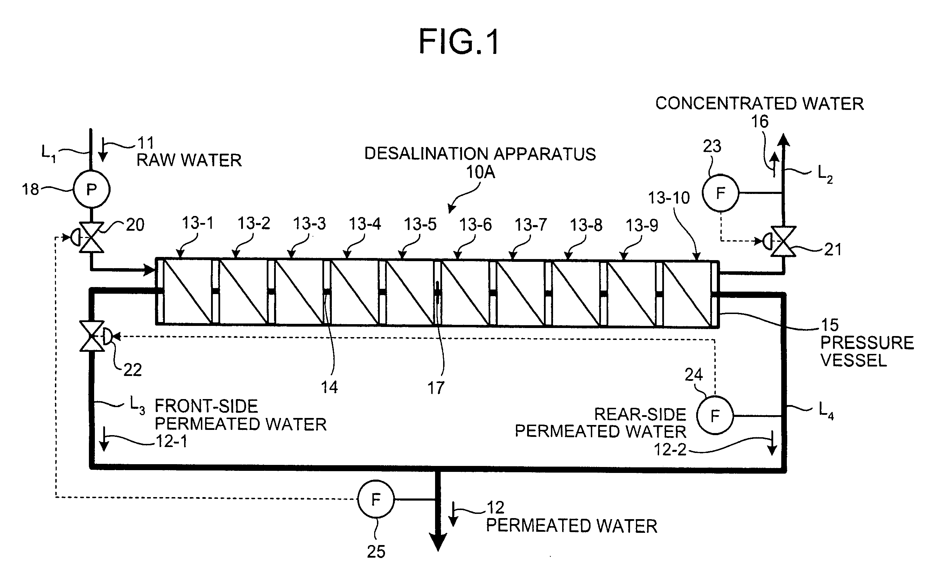

A spiral type seawater desalination apparatus according to an embodiment of the present invention will be described with reference to the accompanying drawings. Fig. 1 is a schematic of a spiral type seawater desalination apparatus according to a first embodiment.

As shown in Fig. 1, a spiral type seawater desalination apparatus (desalination apparatus) 10A includes: a spiral type pressure vessel (pressure vessel) 15 in which a plurality of reverse osmosis membrane apparatuses (hereinafter, "desalination elements" or "elements") 13-1 to 13-10 having spiral reverse osmosis membranes (RO membranes) to obtain permeated water 12 that is fresh water by reducing a salt content from raw water (seawater) 11 that is supplying water, is connected through a permeated water pipe 14, and is housed in a connected state; a raw water supplying line L₁ through which the raw water 11 is supplied into the pressure vessel 15; a concentrated water discharging line L₂ through which concentrated water 16 concentrated in the pressure vessel 15 is discharged; a plug 17 that blocks the permeated water pipe 14 at the center of the reverse osmosis membrane apparatuses 13-1 to 13-10 in the pressure vessel 15; a front-side permeated water line L₃ and a rear-side permeated water line L₄ through which front-side permeated water 12-1 and rear-side permeated water 12-2 are discharged to the exterior, respectively, which are separated fore and aft, respectively, of the permeated water pipe 14 blocked by the plug 17; a pressure regulating valve 20 that is mounted in the raw water supplying line L₁ and regulates the supply pressure of the raw water 11 (70 kg/cm²); a flow regulating valve 21 that is mounted in the concentrated water discharging line L₂ and regulates the discharge flow rate of the concentrated water; and a flow regulating valve 22 that is mounted in the front-side permeated water line L₃ and regulates the pressure of the front-side permeated water 12-1 (10 kg/cm² to 15 kg/cm²). In Fig. 1, numerals 23 to 25 denote flowmeters.

The elements are substantially the same as the elements in Fig. 9 as described above. Each of the elements leads the raw water 11 with a predetermined pressure supplied from the front-side brine seal into between the space between adjacent surfaces of the envelope-shaped RO membrane through a mesh spacer in turn. Permeated water (fresh water) 12 passed through the RO membrane by reverse osmosis is brought out from the rear seal through the permeated water pipe 14. The membranes are shown as sloped lines for convenience of drawing.

In the present embodiment, the plug 17 provided at the center of the pressure vessel 15 separates supplying water into an upstream side (raw water supplying water side) and a downstream side (concentrated water discharging side).

Therefore, the front-side permeated water 12-1 and the rear-side permeated water 12-2 can be obtained separately from the pressure vessel 15 through reverse osmosis membrane apparatuses (elements) 13-1 to 13-5 arranged at the front side and reverse osmosis membrane apparatuses (elements) 13-6 to 13-10 arranged at the rear side of the plug 17.

Providing the plug 17 allows applying a different back pressure to the permeated water 12 obtained from the front elements and the rear elements.

The flow regulating valve 22 is mounted in the front-side permeated water line L₃ for the front-side permeated water 12-1 obtained from the front elements that produce the permeated water 12 readily.

The desalination operation is performed as follows.
(Step 1) A pump 18 is started to supply the raw water 11 into the pressure vessel 15. The flow rate of the concentrated water 16 is regulated by the flow regulating valve 21 that is mounted in the concentrated water discharging line L₂ so as to be a set value (70 kg/cm², for example).
(Step 2) The pressure at the inlet of the RO membrane in the pressure vessel 15 (60 kg/cm² to 70 kg/cm², for example) is regulated by the pressure regulating valve 20 that is mounted in the raw water supplying line L₁, so that the permeated water 12 reaches a design value.
(Step 3) The back pressure (10 kg/cm² to 15 kg/cm², for example) is applied, so that the flow rate of the rear-side permeated water 12-2 obtained from the pressure vessel 15 through the rear-side permeated water line L₄ reaches a set value, by regulating the flow rate by the flow regulating valve 22 that is mounted in the front-side permeated water line L₃.

The back pressure is applied to the front-side permeated water 12-1. As a result of this, it is difficult for the front-side permeated water 12-1 obtained from the front elements (13-1 to 13-5) to be discharged. Therefore, as shown in Fig. 7, the fluctuation between the front elements (13-1 to 13-5) and the rear elements (13-5 to 13-10) can be reduced.

Because of this, the fluctuation of each element can be alleviated as compared with that in Fig. 10 that indicates the case where successive connecting type elements are installed as is conventionally done. Furthermore, even if seven or more elements are housed in the pressure vessel 15, membranes can be utilized effectively because the amount of the permeated water (amount of the produced water) increases.

According to the present invention, the number of RO membranes to be housed in a single pressure vessel 15 can be increased, which enables to reduce the construction costs and the installation area.

Even if a similar number of elements as before (six to eight elements) are housed in the pressure vessel 15, by enabling to reduce the fluctuation in the reverse osmosis membrane elements 13-1 to 13-10 housed in a single pressure vessel 15, the front element 13-1 produces less water to be unlikely stained, and the rearmost element 13-10 is used effectively. As a result, the prolonging life of a membrane and the reduction of the washing frequency of the membrane can be expected. Furthermore, the number of pressure vessels 15 housed can be reduced by as much as the room is made in the front element 13-1.

### Example

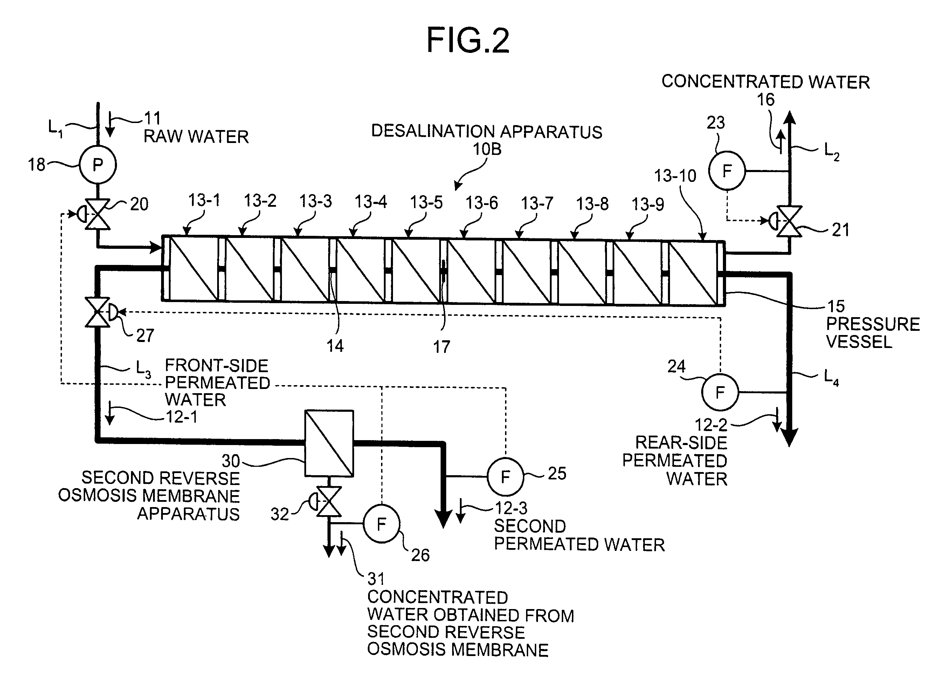

A spiral type seawater desalination apparatus according to another example serving to explain certain features of the present invention will be described with reference to the accompanying drawings. Fig. 2 is a schematic of a spiral type seawater desalination apparatus according to this example.

As shown in Fig. 2, a spiral type seawater desalination apparatus 10B includes, in addition to the apparatus shown in Fig. 1, a second reverse osmosis membrane apparatus 30 that is mounted in the front-side permeated water line L₃ and provides second permeated water 12-3 using the front-side permeated water 12-1 with a high pressure (15 kg/cm²). In the figure, numeral 26 denotes a flowmeter, 31 denotes the concentrated water obtained from the second reverse osmosis membrane, and 32 denotes a flow regulating valve that regulates the flow rate of the concentrated water obtained from the second reverse osmosis membrane. A first reverse osmosis membrane apparatus relative to the second reverse osmosis membrane apparatus 30 means the reverse osmosis membrane elements 13-1 to 13-10 housed in the pressure vessel 15 (hereinafter the same meaning shall apply).

In this apparatus, the front-side permeated water 12-1 has a high pressure (15 kg/cm²), so that desalination is performed at the second reverse osmosis membrane apparatus 30 by utilizing the pressure effectively.

The more desalinized second permeated water 12-3 can be obtained by performing desalination by the second reverse osmosis membrane apparatus 30. The second reverse osmosis membrane apparatus 30 may be either of a hollow string membrane type or a spiral type.

In the present embodiment, the pressure regulating valve 27 installed in the front-side permeated water line L₃ for the front-side permeated water 12-1 applies a back pressure, so that the permeated water 12 obtained from the front elements 13-1 to 13-5 is difficult to be discharged. As a result of this, the fluctuation of the elements between the front side and the rear side can be reduced.

In the first embodiment, the back pressure of the front-side permeated water 12-1 is consumed at the valve. However, in the present example, the second reverse osmosis membrane apparatus 30 treats the front-side permeated water 12-1 once again by using its back pressure. Therefore, the more desalinized high-purity second permeated water 12-3 can be obtained.

Typically, two pumps are required to apply pressure when a treatment is performed using reverse osmosis membrane apparatuses in two steps. In the present example, only a single pump 18 is required, so that the system efficiency is improved.

The concentrated water 31 obtained from the second reverse osmosis membrane apparatus 30 is dilute compared with the raw water 11. Therefore, the raw water 11 that is supplying water is diluted by circulating the concentrated water 31 to the inlet side of the pump 18. As a result, a process in which energy consumption is lower during desalination can be attained.

### Second Embodiment

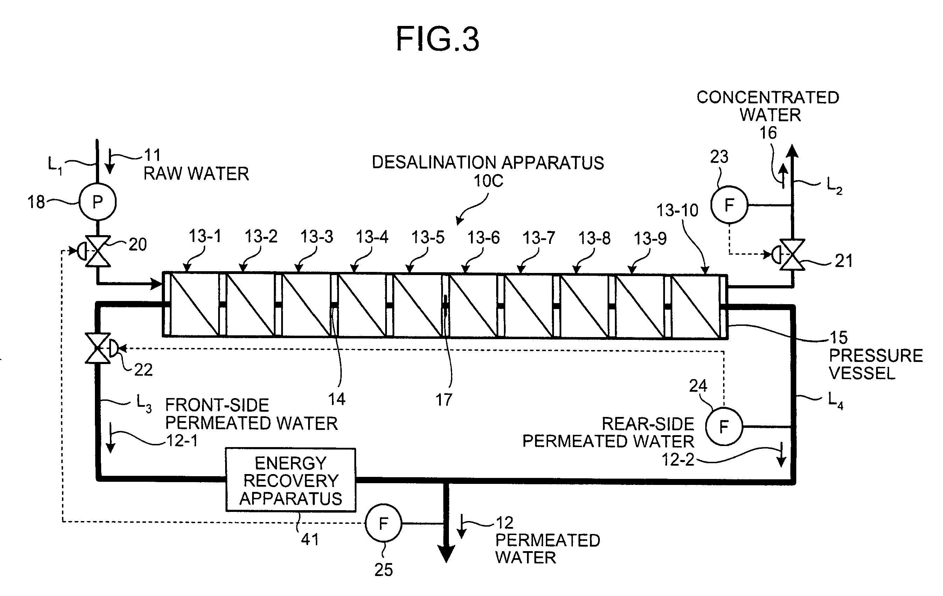

A spiral type seawater desalination apparatus according to an embodiment of the present invention will be described with reference to the accompanying drawings. Fig. 3 is a schematic of a spiral type seawater desalination apparatus according to a second embodiment.

As shown in Fig. 3, a spiral type seawater desalination apparatus 10C includes, in addition to the apparatus shown in Fig. 1, an energy recovery apparatus 41 that is mounted in the front-side permeated water line L₃ and recovers the energy of the front-side permeated water 12-1 with a high pressure (15 kg/cm²).

The front-side permeated water 12-1 has a high pressure (15 kg/cm²), so that the energy recovery apparatus 41 utilizes pressure energy effectively.

The energy recovery apparatus 41 is installed in the front-side permeated water line L₃ connected to the front elements 13-1 to 13-5 from which the permeated water 12 is obtained readily. The recovered energy can be utilized for, for example, the operation performed by the first reverse osmosis membrane apparatus.

Examples of the energy recovery apparatus 41 that can be used include a known recovery apparatus such as a Pelton Wheel energy recovery apparatus, a Turbocharger energy recovery apparatus, a Pressure Exchanger (PX) energy recovery apparatus, and a Dual Work Exchanger Energy Recovery (DWEER) energy recovery apparatus.

The PX energy recovery apparatus alleviates the load of the pump 18 by switching the direction of the piston flow of the front-side permeated water 12-1 in the cylinder of a plurality of revolver-shaped cylindrical rotary bodies to transmit the flow to the raw water 11, thereby utilizing the exchanged pressure (15 kg/cm²).

The DWEER energy recovery apparatus uses a plurality of cylindrical pressure vessels. In each cylinder, the front-side permeated water 12-1 and the raw water 11 are partitioned by partition walls, and the flow direction is switched alternately to transmit one pressure (15 kg/cm²) to the other. Thus, the load of the pump 18 is alleviated by utilizing the exchanged pressure (15 kg/cm²)

### Third Embodiment

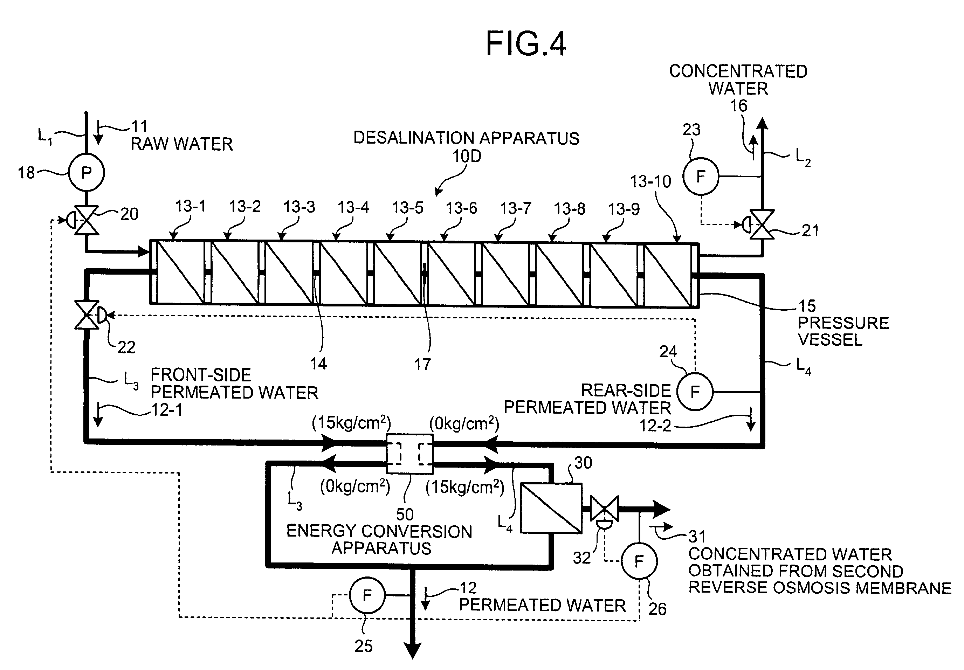

A spiral type seawater desalination apparatus according to an embodiment of the present invention will be described with reference to the accompanying drawings. Fig. 4 is a schematic of a spiral type seawater desalination apparatus according to a third embodiment.

As shown in Fig. 4, a spiral type seawater desalination apparatus 10D includes, in addition to the apparatus shown in Fig. 1, an energy conversion apparatus 50 mounted in the front-side permeated water line L₃ that converts the energy of the front-side permeated water 12-1 with a high pressure (15 kg/cm²) into the energy of the rear-side permeated water 12-2.

The energy of the front-side permeated water 12-1 with a high pressure (15 kg/cm²) is converted into the energy of the rear-side permeated water 12-2 obtained from the rear elements by installing the energy conversion apparatus 50 that converts the pressure directly. By utilizing the pressure (15 kg/cm²), the converted energy may be used for the treatment by the second reverse osmosis membrane apparatus 30.

Examples of the energy conversion apparatus 50 that can be used include a PX energy recovery apparatus and a DWEER energy recovery apparatus.

The PX energy recovery apparatus switches the direction of the piston flow of the front-side permeated water 12-1 in the cylinder of a plurality of revolver-shaped cylindrical rotary bodies to transmit the flow to the rear-side permeated water 12-2. The exchanged pressure (15 kg/cm²) is utilized for the desalination by the second reverse osmosis membrane apparatus 30.

Treating the rear-side permeated water 12-2 improves desalination performance as a whole process, because the water quality of the rear-side permeated water 12-2 (a salt concentration of 300 mg/L) is worse than the water quality of the front-side permeated water 12-1 (150 mg/L).

The DWEER energy recovery apparatus uses a plurality of cylindrical pressure vessels. In each cylinder, the front-side permeated water 12-1 and the rear-side permeated water 12-2 are partitioned by partition walls, and the flow direction is switched alternately to transmit one pressure (15 kg/cm²) to the other.

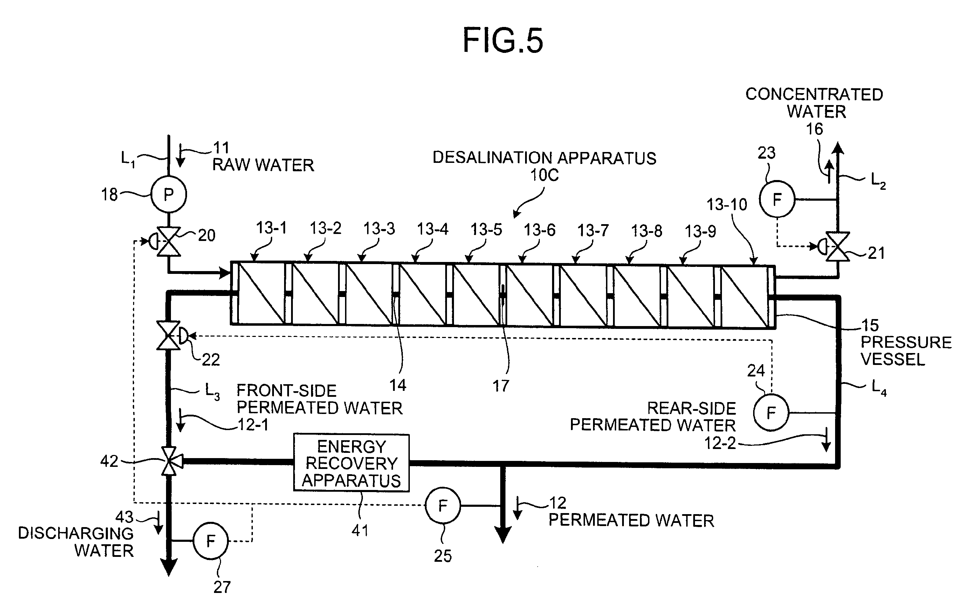

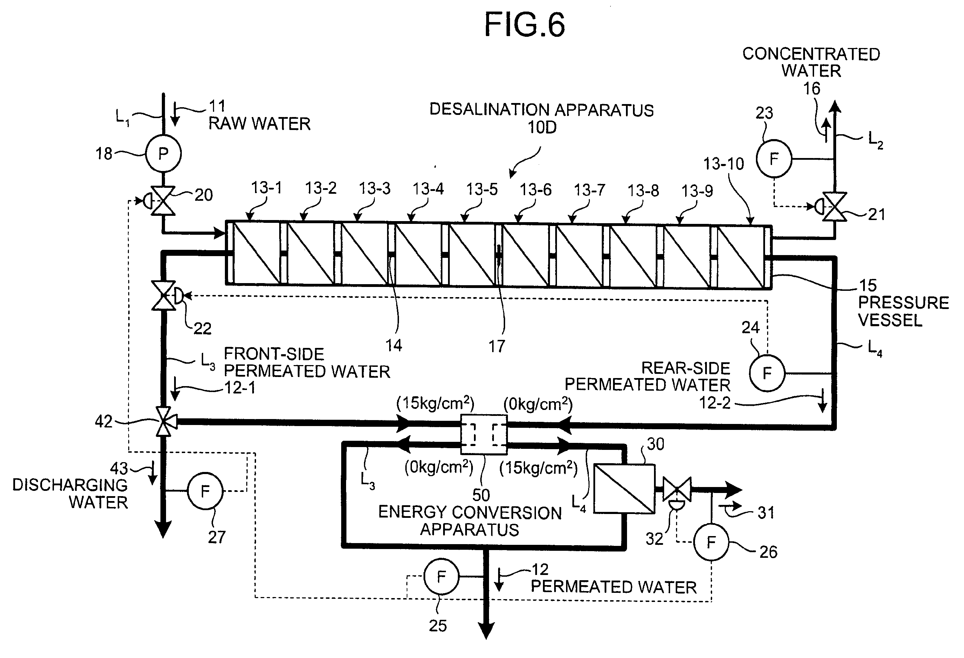

As shown in Fig. 5 and Fig. 6, the desalination apparatuses 10C and 10D include three-way valves 42 between the front-side permeated water 12-1 and the energy recovery apparatus 41 (or the energy conversion apparatus 50) to ease the control of the start-up. In Fig. 5 and Fig. 6, numeral 27 denotes the flowmeter of discharging water 43.

When starting the pump 18, the whole flow is set to be flown to the discharging water 43 side, and after the rear-side permeated water 12-2 is obtained, the flow is set to flow gradually into the energy recovery apparatus 41 (or the energy conversion apparatus 50) by operating the three-way valves 42.

In this case, at Step 2, the pressure regulating valve 20 installed at the raw water 11 side controls the sum of the permeated water 12 and the discharging water 43 to be a set value.

As a result of this, also when the energy recovery apparatus 41 or the energy conversion apparatus 50 is installed, the desalination with high energy efficiency is available.

### INDUSTRIAL APPLICABILITY

As described above, with the desalination apparatus according to the present invention, the fluctuation in reverse osmosis membrane elements can be reduced, and the number of reverse osmosis membrane elements housed in a single pressure vessel can be increased, which improves the production efficiency of seawater desalination.

### EXPLANATIONS OF LETTERS OR NUMERALS

- 10A to 10D: spiral type seawater desalination apparatus
- 11: raw water (seawater)
- 12: permeated water
- 12-1: front-side permeated water
- 12-2: rear-side permeated water
- 13 (13-1 to 13-10): reverse osmosis membrane apparatus having spiral reverse osmosis membrane (RO membrane) (desalination element)
- 14: permeated water pipe
- 15: pressure vessel
- 16: concentrated water
- 17: plug
- 20: pressure regulating valve
- 21, 22: flow regulating valve

## Claims

1. A spiral type seawater desalination apparatus (10A;10C;10D) comprising:
a spiral type pressure vessel (15) in which a plurality of reverse osmosis membrane elements (13-1 to 13-10) having spiral reverse osmosis membranes to obtain permeated water by reducing a salt content from raw water is connected through a permeated water pipe (14);
a raw water supplying line (L1) arranged to supply the raw water into the pressure vessel (15);
a concentrated water discharging line (L2) arranged to discharge concentrated water concentrated in the pressure vessel (15) to exterior;
a plug (17) that blocks the permeated water pipe (14) at a center of the reverse osmosis membrane elements (13-1 to 13-10) in the pressure vessel (15);
a front-side permeated water line (L3) and a rear-side permeated water line (L4) arranged to discharge front-side permeated water (12-1) and rear-side permeated water (12-2) to exterior, respectively, which are separated fore and aft, respectively, at the permeated water pipe (14) blocked by the plug (17) ;
**characterized in** a pressure regulating valve (20) that is mounted in the raw water supplying line (L1) and is arranged to regulate a supply pressure of the raw water such that the flow rate of the permeated water (12) after the front-side permeated water (12-1) and rear-side permeated water (12-2) has been combined reaches a design value;
a flow regulating valve (21) that is mounted in the concentrated water discharging line (L2) and is arranged to regulate a discharge flow rate of the concentrated water such that the flow rate of the concentrated water is at a set value; and
a flow regulating valve (22) that is mounted in the front-side permeated water line (L3) and is arranged to regulate a flow rate of the front-side permeated water such that a flow rate of the permeated water through the rear-side permeated water line (L4) reaches a set value.

2. The spiral type seawater desalination apparatus (10A;10C;10D) according to claim 1, further comprising:
an energy recovery apparatus (41) that is mounted in the front-side permeated water line (L3) and is adapted to recover energy of the front-side permeated water with high pressure.

3. The spiral type seawater desalination apparatus (10A;10C;10D) according to claim 2, wherein a three-way valve (42) is interposed between the flow regulating valve (22) that is mounted in the front-side permeated water line (L3) and the energy recovery apparatus (41).

4. The spiral type seawater desalination apparatus (10A;10C;IOD) according to claim 1, further comprising:
a pressure conversion apparatus (50) that is adapted to convert pressure energy of the front-side permeated water into pressure energy of the rear-side permeated water; and
a second reverse osmosis membrane apparatus (30) that is adapted to produce permeated water through a reverse osmosis membrane using the rear-side permeated water whose pressure is increased.

5. The spiral type seawater desalination apparatus (10A;10C;10D) according to claim 4, wherein a three-way valve (42) is interposed between the flow regulating valve (22) that is mounted in the front-side permeated water line (L3) and the pressure conversion apparatus (50).

## Patentansprüche

1. Eine Meerwasserentsalzungsvorrichtung vom Spiraltyp (10A;10C;10D) mit:
einem Druckgefäß vom Spiraltyp (15), in dem eine Vielzahl von Umkehrosmose-Membranelementen (13-1 bis 13-10) mit spiralförmigen Umkehrosmose-Membranen zum Erhalten von Permeatwasser durch Verringern eines Salzgehalts aus Ausgangswasser über ein Permeatwasserrohr (14) verbunden sind,
einer Ausgangswasser-Zuführleitung (L1), die zum Zuführen des Ausgangswassers in das Druckgefäß (15) angeordnet ist,
einer Konzentratwasser-Austragleitung (L2), die zum Austragen von Konzentratwasser, welches in dem Druckgefäß (15) konzentriert wurde, zur Außenseite angeordnet ist,
einem Verschluss (17), der das Permeatwasserrohr (14) an einer Mitte der Umkehrosmose-Membranelemente (13-1 bis 13-10) in dem Druckgefäß (15) blockiert,
einer frontseitigen Permeatwasserleitung (L3) und einer rückseitigen Permeatwasserleitung (L4), die jeweils zum Austragen von frontseitigem Permeatwasser (12-1) und von rückseitigem Permeatwasser (12-2) zur Außenseite angeordnet sind und die vorne und hinten jeweils an dem Permeatwasserrohr (14), das durch den Verschluss (17) blockiert ist, abgetrennt sind,
**gekennzeichnet durch** ein Druckregelventil (20), das in die Ausgangswasser-Zuführleitung (L1) eingebaut ist und eingerichtet ist, um einen Zuführdruck des Ausgangswassers derart zu regulieren, dass die Strömungsrate des Permeatwassers (12) nach der Zusammenführung des frontseitigen Permeatwassers (12-1) und des rückseitigen Permeatwassers (12-2) einen Auslegungswert erreicht,
ein Strömungsregulierventil (21), das in die Konzentratwasser-Austragleitung (L2) eingebaut ist und eingerichtet ist, um eine Austrag-Strömungsrate des Konzentratwassers derart zu regulieren, dass die Strömungsrate des Konzentratwassers bei einem eingestellten Wert ist, und
ein Strömungsregulierventil (22), das in die frontseitige Permeatwasserleitung (L3) eingebaut ist und eingerichtet ist, um eine Strömungsrate des frontseitigen Permeatwassers derart zu regulieren, dass eine Strömungsrate des Permeatwassers **durch** die rückseitige Permeatwasserleitung (L4) einen Einstellwert erreicht.

2. Die Meerwasserentsalzungsvorrichtung vom Spiraltyp (10A;10C;10D) gemäß Anspruch 1, ferner mit:
einer Energie-Rückgewinnungsvorrichtung (41), die in die frontseitige Permeatwasserleitung (L3) eingebaut ist und eingerichtet ist, um Energie des frontseitigen Permeatwassers mit hohem Druck zurückzugewinnen.

3. Die Meerwasserentsalzungsvorrichtung vom Spiraltyp (10A;10C;10D) gemäß Anspruch 2, wobei ein Dreiwegeventil (42) zwischen dem Strömungsregulierventil (22), das in die frontseitige Permeatwasserleitung (L3) eingebaut ist, und der Energie-Rückgewinnungsvorrichtung (41) eingefügt ist.

4. Die Meerwasserentsalzungsvorrichtung vom Spiraltyp (10A;10C;10D) gemäß Anspruch 1, ferner mit:
einer Druckwandelvorrichtung (50), die eingerichtet ist, um Druckenergie des frontseitigen Permeatwassers in Druckenergie des rückseitigen Permeatwassers umzuwandeln, und
einer zweiten Umkehrosmose-Membranvorrichtung (30), die eingerichtet ist, um Permeatwasser durch eine UmkehrosmoseMembran unter Anwendung des rückseitigen Permeatwassers, dessen Druck erhöht wurde, zu erzeugen.

5. Die Meerwasserentsalzungsvorrichtung vom Spiraltyp (10A;10C;10D) gemäß Anspruch 4, wobei ein Dreiwegeventil (42) zwischen das Strömungsregulierventil (22), das in die frontseitige Permeatwasserleitung (L3) eingebaut ist, und die Druckwandelvorrichtung (50) eingefügt ist.

## Revendications

1. Appareil de désalinisation de l'eau de mer en spirale (10A ; 10C ; 10D), qui comprend :
un réservoir sous pression en spirale (15) dans lequel plusieurs éléments à membrane à osmose inverse (13-1 à 13-10) ayant des membranes à osmose inverse en spirale qui permettent d'obtenir de l'eau filtrée en réduisant la teneur en sel de l'eau brute sont reliés par le biais d'un tuyau à eau filtrée (14) ;
une conduite d'alimentation en eau brute (L1) prévue pour fournir l'eau brute audit réservoir sous pression (15) ;
une conduite d'évacuation d'eau concentrée (L2) prévue pour évacuer l'eau concentrée dans ledit réservoir sous pression (15) vers l'extérieur ;
un bouchon (17) qui bloque ledit tuyau à eau filtrée (14) au niveau du centre desdits éléments à membrane à osmose inverse (13-1 à 13-10) dans ledit réservoir sous pression (15) ;
une conduite d'eau filtrée avant (L3) et une conduite d'eau filtrée arrière (L4) prévues pour évacuer l'eau filtrée avant (12-1) et l'eau filtrée arrière (12-2) vers l'extérieur, respectivement, et qui sont séparées à l'avant et à l'arrière, respectivement, au niveau dudit tuyau à eau filtrée (14) bloqué par ledit bouchon (17) ;
**caractérisé par** une soupape de régulation de la pression (20) montée dans ladite conduite d'alimentation en eau brute (L1) et prévue pour réguler la pression d'alimentation de l'eau brute de sorte que le débit de l'eau filtrée (12) après que l'eau filtrée avant (12-1) et l'eau filtrée arrière (12-2) aient été combinées atteigne une valeur prévue ;
une soupape de régulation du débit (21) montée dans la conduite d'évacuation d'eau concentrée (L2) et prévue pour réguler le débit de décharge de l'eau concentrée de sorte qu'il soit à une valeur définie ; et
une soupape de régulation du débit (22) montée dans la conduite à eau filtrée avant (L3) et prévue pour réguler le débit de l'eau filtrée avant de sorte que le débit de l'eau filtrée dans la conduite à eau filtrée arrière (L4) atteigne une valeur définie.

2. Appareil de désalinisation de l'eau de mer en spirale (10A ; 10C ; 10D) selon la revendication 1, qui comprend en outre :
un appareil de récupération de l'énergie (41) monté dans ladite conduite à eau filtrée avant (L3) et prévu pour récupérer l'énergie de l'eau filtrée avant avec une pression élevée.

3. Appareil de désalinisation de l'eau de mer en spirale (10A ; 10C ; 10D) selon la revendication 2, dans lequel une soupape à trois voies (42) est interposée entre ladite soupape de régulation du débit (22) montée dans la conduite à eau filtrée avant (L3) et ledit appareil de récupération de l'énergie (41).

4. Appareil de désalinisation de l'eau de mer en spirale (10A ; 10C ; 10D) selon la revendication 1, qui comprend en outre :
un appareil de conversion de la pression (50) adapté pour convertir la pression de l'eau filtrée avant en pression de l'eau filtrée arrière ; et
un second appareil à membrane à osmose inverse (30) adapté pour produire de l'eau filtrée à l'aide d'une membrane à osmose inverse en utilisant l'eau filtrée arrière dont la pression est augmentée.

5. Appareil de désalinisation de l'eau de mer en spirale (10A ; 10C ; 10D) selon la revendication 4, dans lequel une soupape à trois voies (42) est interposée entre la soupape de régulation du débit (22) montée dans la conduite à eau filtrée avant (L3) et l'appareil de conversion de pression (50).
